# EUROPEAN PATENT SPECIFICATION

(11) **EP 0 776 598 B1**
(45) Date of publication and mention of the grant of the patent: **02.05.2002**
(21) Application number: 96203209.0
(22) Date of filing: 20.11.1996
(51) Int. Cl.: A01B 63/111, A01B 33/08

(54) **A rotary harrow**
Kreiselegge
Herse rotative

(30) Priority: 20.11.1995 NL 1001693
(43) Date of publication of application: 04.06.1997
(73) Proprietor: MAASLAND N.V., 3155 PD Maasland (NL)
(72) Inventor: van der Lely, Olaf, 6312 Steinhausen (CH)
(74) Representative: Corten, Maurice Jean F.M.

(56) References cited:
- EP-A- 0 181 425
- EP-A- 0 241 748
- EP-A- 0 275 342
- WO-A-86/01906
- GB-A- 2 184 331
- US-A- 4 529 039
- PATENT ABSTRACTS OF JAPAN vol. 017, no. 124 (C-1035), 16 March 1993 & JP 04 304804 A (KUBOTA CORP), 28 October 1992,
- PATENT ABSTRACTS OF JAPAN vol. 009, no. 016 (P-329), 23 January 1985 & JP 59 164940 A (YANMAR NOKI KK), 18 September 1984,
- PATENT ABSTRACTS OF JAPAN vol. 013, no. 107 (C-576), 14 March 1989 & JP 63 283505 A (KUBOTA LTD), 21 November 1988,
- PATENT ABSTRACTS OF JAPAN vol. 014, no. 253 (P-1054), 30 May 1990 & JP 02 067606 A (MITSUBISHI AGRICULT MACH CO LTD), 7 March 1990,
- PATENT ABSTRACTS OF JAPAN vol. 017, no. 394 (C-1088), 23 July 1993 & JP 05 076207 A (KUBOTA CORP), 30 March 1993,
- DATABASE WPI Week 8544 29 November 1986 Derwent Publications Ltd., London, GB; AN 8527510544 XP002009477 & SU 1 152 537 A (POVOLZHSK MACH TEST) , 30 April 1985
- PATENT ABSTRACTS OF JAPAN vol. 018, no. 128 (C-1174), 2 March 1994 & JP 05 316805 A (KUBOTA CORP), 3 December 1993,
- PATENT ABSTRACTS OF JAPAN vol. 96, no. 001 & JP 08 023710 A (MITSUBISHI AGRICULT MACH CO LTD), 30 January 1996,

## Description

The invention relates to a rotary harrow according to the preamble of claim 1.

Such a rotary harrow is disclosed in GB-A-2184331. This prior art rotary harrow has a single sensor by means of which the distance of a frame member with respect to the soil rearwardly of the working member is measured so as to establish the plowing depth.

A further construction is known from the Dutch publication 8 600 476. In the known construction the means for determining the working depth are produced as mechanical means and comprise a rod system which is coupled, on the one hand, with an arm for the roller, which arm is centrally disposed in the machine, and, on the other hand, with the upper side of the coupling trestle of the rotary harrow. The latter connection facilitates the reading out by the driver of a scale indicating the depth. A suchlike construction is relatively complicated, partly due to the required rod system, and expensive.

From the German "Offenlegungsschrift" 3 617 228 it is known, for the purpose of determining the working depth of a rotary tiller, to apply an ultrasonic sensor for measuring the height of the frame relative to the worked soil surface. To this end the rotary tiller is provided with an arm projecting backwardly from the machine, at the end of which arm the ultrasonic sensor is provided. Such a construction has the advantage that measurement can be carried out on a levelled surface, but has the drawback that signals reflected by crumbled soil, probably as a result of diffusion, are very weak and consequently difficult to process. The construction has the additional disadvantage of hampering a possible combination of the machine with a sowing machine.

A member projecting backwardly from a rotary tiller in a comparibly disadvantageous manner is known from the Patent abstract of Japan, JP 4 166 002, published by the European Patent Office, whereby there is disposed a feeler trailing over the treated seedbed, which feeler is constituted by a bent plate, coupled with the arms about horizontal shafts and extending substantially horizontally over the machine width.

The present invention aims at obtaining a rotary harrow, in which, by means of modern, electronic measuring elements, whilst avoiding the disadvantages mentioned, a determination of the working depth can be carried out in a simple and favourable manner. In accordance with the invention, this is achieved in a construction having the characteristics of claim 1.

A particular embodiment of the rotary harrow comprises the features of the characterising part of claim 5. Such a construction has the advantage that the local working depth can be included as an explanatory factor in the yield analysis of the relevant crop. By means of the above-mentioned agricultural method, known as yieldmapping, it is also possible, during operation, locally to adapt the working depth, e.g. to the soil characteristics. The processing unit is equipped with means suitable for inputting a value for the desired working depth, e.g. either via a keyboard, memory disks, or a direct connection with a business computer. The desired working depth can be indicated per field part, i.e. depending on the location, in order to realize locally, during operation, an automatic adjustment of the momentary working depth to the locally desired one. Furthermore, the processing unit is designed so as to be able to cooperate with positioning means, in particular those adapted to function within the Global Positioning System or GPS-system, and, if required, to comprise same.

For a better understanding of the present invention and to show how the same may be carried into effect, reference will now be made, by way of example, to the accompanying drawings, in which:
Figure 1 shows schematically, in side view, a rotary harrow according to an embodiment of the invention; and
Figure 2 is a view as shown in Figure 1 of a rotary harrow according to an alternative embodiment.

In the drawings, corresponding parts have been indicated by the same reference numerals. Furthermore, the invention is by no means restricted to the embodiments shown and described here; they only serve to illustrate the inventive idea.

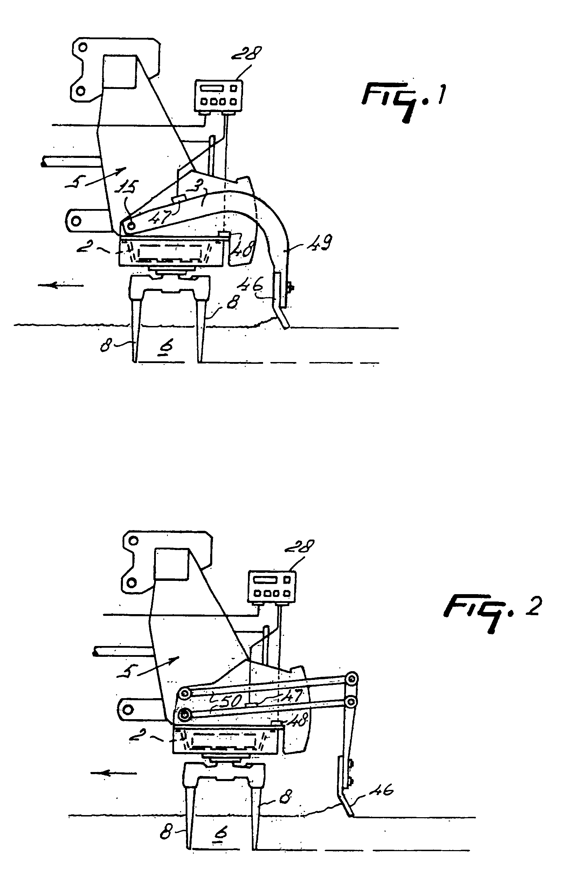

Figure 1 shows an embodiment according to the invention in which the rotary harrow consists of the frame, the soil-working members accommodated therein and a crumbling and levelling member 46 disposed behind the working members 6. In this embodiment the crumbling and levelling member 46 is constituted by a plate, extending horizontally over the entire working width of the machine and arranged substantially vertically. Via a couple of arms 49, the member 46 is pivotably connected about a pivot shaft 15 with the frame 2 of the machine. On the frame 2 or the coupling trestle for the machine, as well as on an arm 49, 50 for the crumbling and levelling member 46, there is disposed an angle sensor or clinometer 48, 47 respectively. On the basis of the difference between the angle sensors 47 and 48 and the known goniometric relations in the machine, determined by the processing unit 28, said processing unit 28 calculates at least almost continuously the working depth of the rotary harrow.

Figure 2 illustrates a similar embodiment of the rotary harrow, whereby the member 46, via a quadrangular hinge construction, in this embodiment constituted by a parallelogram, is coupled with the frame of the machine. The sensor 47 may be disposed on any horizontal arm 50 or vertical arm for the crumbling member 46.

In accordance with the invention, the processing unit 28 comprises software and hardware for the so-called yield mapping agricultural system. In an alternative embodiment, the unit can cooperate therewith. The rotary harrow may be provided with an adjusting element, such as a hydraulic cylinder, which is active between the roller and the frame 2 or the coupling trestle 5. In such an embodiment, there are available electronically produced and automatically active control means by means of which, depending on control signals of the processing unit 28, the adjusting element for the adjustment of the working depth is operated. The control signals emanating from the processing unit 28 may also be supplied to the tractor system, in order to control automatically the lifting hitch of the tractor, e.g. when the rotary harrow is produced without a roller.

## Claims

1. A rotary harrow including drivable soil working members (6), provided with a roller and/or a crumbling and levelling member (46) arranged behind the soil working members (6), which roller and which member (46) are connected with the frame (2, 5) of the rotary harrow so as to be pivotable in height by means of arms (3, 49, 50), electronic means being provided for determining the working depth, **characterized in that** the electronic means for determining the working depth comprise at least two electronic angle sensors (47, 48), at least one of which is connected with the frame (2, 5) of the rotary harrow and an other is connected with at least one arm (3, 49, 50) of the roller and/or of the crumbling and levelling member.

2. A rotary harrow as claimed in claim 2, **characterized in that** the angle sensor (47, 48) is connected with an electronic processing unit (28), which is designed such that by means of said unit, in a calibration position in which the machine rests in a virtually equal level as that of the roller coupled thereto or that of the crumbling and levelling plate (46), a zero setting of the angle can be executed.

3. A rotary harrow as claimed in 2, **characterized in that** the electronic processing unit (28) is designed so as to indicate a longitudinal measurement for the working elements (8) and/or a visual or auditive attention signal in relation with a replacement instruction or in relation with a too small length relative to a desired working depth stored in the processing unit (28).

4. A rotary harrow as claimed in claim 2 or 3, **characterized in that** the processing unit, in particular for a so-called yieldmapping system, is provided with recording means for recording, depending on the position of the rotary harrow, the momentary working depth determined via the means for determining the working depth, whereby in particular the position is determined by means of GPS-means.

5. A rotary harrow as claimed in any one of claims 2 to 4, **characterized in that** the processing unit (28) cooperates with a yieldmapping system or comprises said system, and the processing unit is suitable for automatically supplying a signal indicating the extent and the direction of a desired adjustment of the working depth.

6. A rotary harrow according to any one of the preceding claims, **characterized in that** the rotary harrow is provided with an adjusting element disposed between the frame (2, 5) and the roller, and with automatic control means for influencing, depending on the position of the rotary harrow or depending on a soil condition observed, the control element for the automatic adjustment of the working depth.

## Patentansprüche

1. Kreiselegge mit antreibbaren Bodenbearbeitungsgliedern (6), die mit einer Walze und/oder einem Krümel- und Nivellierungsglied (46) versehen ist, die hinter den Bodenbearbeitungsgliedern (6) angeordnet sind, wobei die Walze und das Glied (46) mit dem Rahmen (2, 5) der Kreiselegge derart verbunden sind, daß sie mit Hilfe von Armen (3, 49, 50) höhenverschwenkbar sind, wobei eine elektronische Vorrichtung zur Ermittlung der Arbeitstiefe vorhanden ist,
**dadurch gekennzeichnet, daß** die elektronische Vorrichtung zur Ermittlung der Arbeitstiefe mindestens zwei elektronische Winkelsensoren (47, 48) umfaßt, von denen mindestens einer mit dem Rahmen (2, 5) der Kreiselegge und ein anderer mit mindestens einem Arm (3, 49, 50) der Walze und/oder des Krümel- und Nivellierungsgliedes verbunden ist.

2. Kreiselegge nach Anspruch 1,
**dadurch gekennzeichnet, daß** der Winkelsensor (47, 48) mit einer elektronischen Verarbeitungseinheit (28) verbunden ist, die derart ausgelegt ist, daß mit Hilfe der Einheit in einer Eichposition, in der sich die Maschine praktisch in derselben Höhe wie die mit ihr verbundene Walze oder die Krümel- und Nivellierungsplatte (46) befindet, eine Nulleinstellung des Winkels vorgenommen werden kann.

3. Kreiselegge nach Anspruch 2,
**dadurch gekennzeichnet, daß** die elektronische Verarbeitungseinheit (28) derart ausgelegt ist, daß sie eine Längenmessung der Bearbeitungselemente (8) anzeigt und/oder ein optisches oder akustisches Warnsignal gibt, wenn es sich um eine Anweisung zum Austausch handelt, oder wenn die Länge im Verhältnis zu einer in der Verarbeitungseinheit (28) gespeicherten gewünschten Arbeitstiefe zu gering ist.

4. Kreiselegge nach Anspruch 2 oder 3,
**dadurch gekennzeichnet, daß** die Verarbeitungseinheit, insbesondere bei einem sogenannten System zum Kartieren von Erträgen, mit einer Aufzeichnungsvorrichtung versehen ist, um in Abhängigkeit von der Position der Kreiselegge die momentane Arbeitstiefe aufzuzeichnen, die über die Vorrichtung zur Ermittlung der Arbeitstiefe ermittelt worden ist, wobei insbesondere die Position mit Hilfe einer GPS-Vorrichtung ermittelt wird.

5. Kreiselegge nach einem der Ansprüche 2 bis 4,
**dadurch gekennzeichnet, daß** die Verarbeitungseinheit (28) mit einem System zum Kartieren von Erträgen zusammenwirkt oder dieses System umfaßt und die Verarbeitungseinheit dazu ausgelegt ist, automatisch ein Signal zu liefern, das das Maß und die Richtung einer gewünschten Einstellung der Arbeitstiefe anzeigt.

6. Kreiselegge nach einem der vorhergehenden Ansprüche,
**dadurch gekennzeichnet, daß** die Kreiselegge mit einem zwischen dem Rahmen (2, 5) und der Walze angeordneten Stellelement und mit einer automatischen Steuervorrichtung versehen ist, um in Abhängigkeit von der Position der Kreiselegge oder in Abhängigkeit von einer festgestellten Bodenbeschaffenheit das Steuerelement für die automatische Einstellung der Arbeitstiefe zu beeinflussen.

## Revendications

1. Herse rotative comprenant des éléments de travail du sol (6) pourvus d'un rouleau et/ou d'un élément de rebêchage et d'aplanissement (46) agencés derrière les éléments de travail du sol (6), lequel rouleau et lequel élément (46) sont raccordés au châssis (2, 5) de la herse rotative de manière à pouvoir pivoter en hauteur au moyen de bras (3, 49, 50), des moyens électroniques étant fournis pour déterminer la profondeur de travail, **caractérisée en ce que** les moyens électroniques pour déterminer la profondeur de travail comprennent au moins deux capteurs d'angle électroniques (47, 48), dont au moins l'un est raccordé au châssis (2, 5) de la herse rotative et un autre est raccordé à au moins un bras (3, 49, 50) du rouleau et/ou de l'élément de rebêchage et d'aplanissement.

2. Herse rotative selon la revendication 2, **caractérisée en ce que** le capteur d'angle (47, 48) est raccordé à une unité de traitement électronique (28) qui est conçue de telle manière qu'au moyen de ladite unité, dans une position de calibrage dans laquelle la machine repose à un niveau environ égal à celui du rouleau qui y est couplé ou celui du plateau de rebêchage et d'aplanissement (46), un paramètre zéro de l'angle peut être exécuté.

3. Herse rotative selon la revendication 2, **caractérisée en ce que** l'unité de traitement électronique (28) est conçue de manière à indiquer une mesure longitudinale pour les éléments de travail (8) et/ou un signal d'attention visuel ou auditif en relation avec une instruction de remplacement ou en relation avec une longueur trop petite par rapport à une profondeur de travail souhaitée stockée dans l'unité de traitement (28).

4. Herse rotative selon la revendication 2 ou 3 **caractérisée en ce que** l'unité de traitement, en particulier pour un tel système de cartographie des rendements, est pourvu de systèmes d'enregistrement, dépendant de la position de la herse rotative, la profondeur de travail momentanée déterminée via les moyens pour déterminer la profondeur de travail, moyennant quoi la position e n particulier est déterminée à l'aide de moyens GPS.

5. Herse rotative selon l'une quelconque des revendications 2 à 4, **caractérisée en ce que** l'unité de traitement (28) coopère avec un système de cartographie des rendements ou comprend ledit système, et l'unité de traitement est adaptée pour fournir automatiquement un signal indiquant l'étendue et la direction d'un ajustement souhaité de la profondeur de travail.

6. Herse rotative selon l'une quelconque des revendications précédentes, **caractérisée en ce que** la herse rotative est pourvue d'un élément d'ajustage disposé entre le châssis (2, 5) et le rouleau et de moyens de commande automatique pour influencer, en fonction de la position de la herse rotative ou en fonction de la condition du sol observée, l'élément de commande pour l'ajustement automatique de la profondeur de travail.
